# EUROPEAN PATENT APPLICATION

(11) **EP 1 604 815 A1**
(43) Date of publication of application: **14.12.2005**
(21) Application number: 05396020.9
(22) Date of filing: 07.06.2005
(51) Int. Cl.: B32B 17/10, B32B 27/36, B41M 7/00

(54) **Method for making laminated patterned glass and corresponding patterned glass**

(30) Priority: 09.06.2004 FI 20040798
(71) Applicant: Lasitukku Rakla Oy, 00700 Helsinki (FI)
(72) Inventor: Jurvanen, Rainer Olavi c/o Lasitukku Rakla Oy, 00700 Helsinki (FI)
(74) Representative: Helino, Timo Kalervo

(57) **Abstract**

The invention relates to a method for making laminated patterned glass and to corresponding laminated patterned glass. In the method, two glass sheets (4) are provided; two laminating foils (3) are sandwiched between the glass sheets; and a patterned layer is put between the laminating foils, after which the pieces of glass are pressed together and heated so that the laminating foils melt so as to glue the pieces of glass to form a uniform whole. According to the invention, as the laminating foil (3), a foil that is impermeable to UV radiation is used, and the patterned layer is made of a polyester film (1) having a desired patterning (2) arranged therein.

## Description

### FIELD OF THE INVENTION

The invention relates to a method as defined in the preamble of claim 1 for making laminated patterned glass, as well as to patterned glass as defined in the preamble of claim 10.

### BACKGROUND OF THE INVENTION

The most conventional way of placing various separate patterns or texts in a glass sheet is to glue the desired patterns onto the glass surface in the form of adhesive labels. Patterns on a glass surface have several disadvantages. They get worn, chafed, torn and fade with time, and they can also be intentionally torn.

Attempts have been made to eliminate these problems e.g. using a laminated patterned structure described in publication EP 0 686 495, which, however, only provides a partial improvement to the prior-art problems. As the patterns are disposed within two glass sheets, they are protected from wear. The problem here is, however, how to keep the patterns sharp-edged and bright throughout the laminating process and the patterns unfading.

### OBJECTIVE OF THE INVENTION

The objective of the invention is to eliminate the disadvantages referred to above.

One specific objective of the invention is to disclose a new type of manufacturing method of laminated glass, as well as laminated patterned glass whose patterns can be kept bright and clear both throughout the manufacturing process and during use.

### SUMMARY OF THE INVENTION

The manufacturing method of laminated patterned glass in accordance with the invention is characterised by what has been presented in claim 1.

In the method of the invention for manufacturing laminated patterned glass, there are provided two glass sheets, and two laminating foils are sandwiched between them, and between the laminating foils there is put a patterned layer. When the glass sheets are pressed together and heated so that the laminating foils melt, the laminating foils act to glue the laminating foils to form a uniform whole, consisting of two glass sheets and an elastic adhesive layer between them. According to the invention, as the laminating foil, a foil that is substantially impermeable to UV radiation is used, and the patterned layer is made of a polyester film having a desired pattern arranged therein. Preferably, as the laminating foil, a PVB foil is used. In this manner, a bright, colourless foil that is permeable to light is used as both the laminating foil and the polyester film in the invention, whereby the desired colour, pattern or other appearance on the surface is implemented using colouring agents suitable for a polyester film.

The desired pattern on the polyester film can be made by imprinting, printing, copying or by any other suitable method, thus enabling one to implement the desired patterning. The patterning can consist of various separate images or of patterns, texts, colour surfaces, or of any other surface or a portion of a surface deviating from a bright and transparent one.

Preferably, in the patterning, one uses water-soluble colours that withstand better and more unchanged the temperatures to be used in a laminating process than various solvent-dilutable colouring agents.

As besides purity, the basic condition for a successful laminating job is the dryness of the foils, that is absolute waterlessness, there is a reason to dry the polyester film very thoroughly after patterns have been made into it, especially when using water-soluble colours.

As the dryness of the polyester film and of the pattern on the surface thereof is categorical to achieve a successful outcome, the polyester film preferably is dried at a suitable mild temperature for at least 10, preferably 15-30, e.g. 24 hours. When the drying is, in addition, performed in a space in which the relative humidity is kept low, e.g. less than 20%, one can be sure of the absolute dryness of the polyester foil.

Because, like water, air bubbles are harmful in a laminating process, prior to laminating, air is preferably sucked from between the glass sheets and the laminating foils; that is the glass sheets with the foils between them are placed in a suitable hermetically sealable chamber, into which a sufficient vacuum can be sucked prior to heating.

In the actual laminating process or when laminating the pieces of glass and the foils to join them to one another, the glass sheets and the foils between them are heated as uniformly as possible, that is sufficiently slowly by raising the temperature and for a sufficiently long time so that all the components in the structure warm up substantially simultaneously and reach substantially the same temperature at the same time throughout their entire dimensions. Thus in practice, the heating usually takes more than 2, preferably 3-5 hours.

As the laminating temperature, there is preferably used 118 ± 2°C, which has been found to sufficiently melt the laminating foils, but, however, not to such an extent that the patterns in the middlemost foil or the colours used would be damaged.

Preferably, sucking away the air as well as the actual laminating or treatment with heat of the sheets and foils is performed with these being hinged on two hermetic foils, the foils being secured to suitable frames. As the foils and the pieces of glass within them are, in addition, kept in an upright position, the pieces of glass are floating, hinged on the foils, throughout the entire laminating process. In this manner, there is no need to grip the pieces of glass with fixed clutches or with other structures that would weaken the transmission of heat to the glass at the points of gripping. In this manner, the effect of heat on the pieces of glass is made completely uniform throughout their entire surface area and the laminating result flawless.

The laminated patterned glass in accordance with the invention is characterised by what has been presented in claim 10.

The laminated patterned glass in accordance with the invention comprises two glass sheets having between them two laminating foils and a patterning layer in the middle of them. According to the invention, as the laminating foils there are used UV-resistant PVB foils, and the patterning layer consists of a polyester foil having the desired patterns imprinted thereon using a water-soluble colouring agent. In this manner, the glass sheets, the laminating foils and the polyester foil used in the laminated patterned glass in accordance with the invention are bright and transparent components of the patterned glass; and the appearance, colour, patterning or other visible part of the product is formed by the desired pattern or other colouring arranged in the middle of the glass sheets or PVB foils.

The laminated patterned structure in accordance with the invention and the manufacturing method thereof have significant advantages compared to the prior art. The invention enables one to manufacture patterned glass that is durable, permanent and unchanged under all conditions. Using suitable foils and water-soluble colours in conjunction with them keeps the patterns bright and unchanged during the heating included in the laminating process. Using, around the patterns made of water-soluble colours, foils that protect from UV radiation keeps the patterns bright and unchanged. Furthermore, the patterns and foils being disposed underneath the glass surfaces on both sides, the patterns remain unchanged under all conditions.

### LIST OF FIGURES

In the following section, the invention will be described in detail with reference to the accompanying drawings, in which
Fig. 1 schematically represents the manufacturing phases of patterned glass in accordance with the invention; and
Fig. 2 represents in more detail one phase of the manufacture.

### DETAILED DESCRIPTION OF THE INVENTION

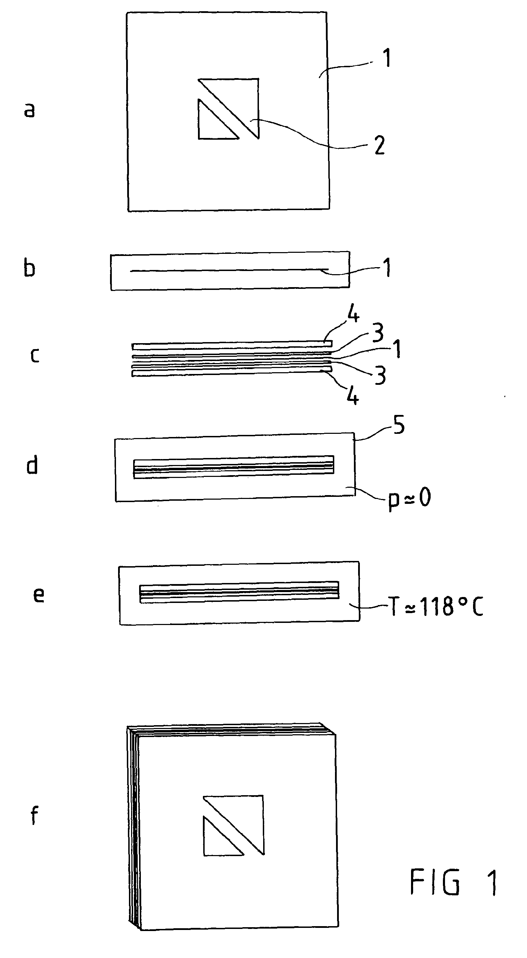

In Fig. 1, at point a, a polyester film 1 is provided, in which a desired pattern 2 is made e.g. by imprinting or printing using a water-soluble colouring agent.

After this, at point b, the polyester film is dried in a suitable drying room 3 for a sufficiently long period so as to ensure that it is surely dry and anhydrous. The drying is worth doing slowly and with care so that the film and pattern are not damaged. Hence, the drying takes several hours, preferably up to one day.

At point c, both sides of the polyester film 1 are provided with laminating foils 3 or PVB foils, and with glass sheets 4 on both sides thereof.

These five layers are placed on top of each other and pressed together at point d in a hermetic chamber 5, in which a vacuum is arranged so that all the air is sucked from between the foils and the pieces of glass as carefully as possible.

At following step e, the temperature of the chamber, glass and foil layers is raised to a temperature of about 118 °C, making the laminating foils used melt and join the glass sheets to one another to form one solid structure. A relatively long period of treatment with heat, preferably 3-5 hours, and a relatively low temperature, about 118 °C, are first used to ensure that the foils are completely molten and the glass sheets joined to one another; and second, the persistency of the pattern shapes and colours throughout the treatment with heat is ensured.

After a slow and gentle cooling, at point f, a laminated patterned piece of glass is produced, in which the pattern 2 made at point a is shown bright and clear.

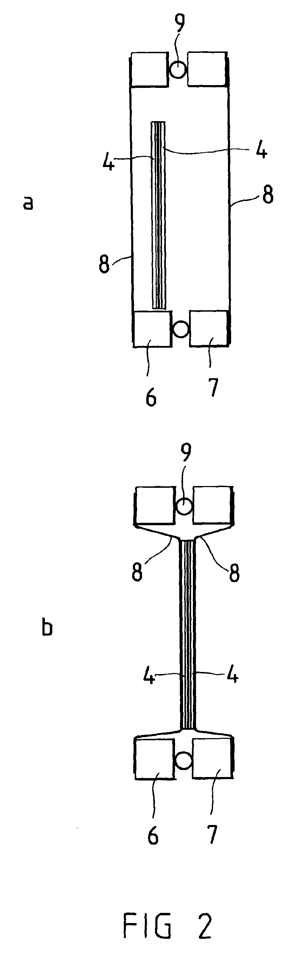

Fig. 2a is a cross-sectional view showing a frame that is used in the laminating job in accordance with the invention. The frame comprises two rectangular aluminium frames 6 and 7 having on their outer surfaces elastic and hermetic covering foils 8. The frames 6 and 7 can be hermetically pressed against each other by means of a gasket 9 between them. In this manner, a space is defined between the frames 6 and 7 and the covering foils 8, into which the pieces of glass 4 to be laminated and the foils between them are placed.

As shown in Fig. 2b, when sucking the middle space to be substantially free from air, a negative pressure of about 0.95 bar is produced therein. In that case, the pieces of glass 4 are sandwiched between the covering foils 8, and float hinged on the covering foils in the vertical direction. After a sufficient suction effect, also the treatment with heat or the actual laminating is performed as the pieces of glass are floating hinged on the covering foils in the vertical direction. In that case, no solid structure interferes with the transmission of heat to the pieces of glass and through them to the foils, making the laminating work happen in a completely similar, uniform and simultaneous process throughout the entire surface area of the glass sheets.

The invention is not limited merely to the example referred to above; instead many variations are possible within the scope of the claims.

## Claims

1. A method for making laminated patterned glass, in which method two glass sheets (4) are provided; two laminating foils (3) are sandwiched between the glass sheets; and a patterned layer is put between the laminating foils, after which the pieces of glass are pressed together and heated so that the laminating foils melt so as to glue the pieces of glass to form a uniform whole, **characterised in that** as the laminating foil (3), a foil that is substantially impermeable to UV radiation is used, and the patterned layer is made of a polyester foil (1) having a desired pattern (2) arranged therein.

2. The method as defined in claim 1,
**characterised in that** as the laminating foil (3), a PVB foil is used.

3. The method as defined in claim 1,
**characterised in that** the patterning (2) is made in the polyester film (1) by imprinting, printing, copying or in a similar manner.

4. The method as defined in claim 1,
**characterised in that** in patterning, water-soluble colours are used.

5. The method as defined in claim 4,
**characterised in that** after making the pattern the polyester film (1) is dried prior to the lamination.

6. The method as defined in claim 5,
**characterised in that** the drying takes about 10, preferably 15-30, e.g. 24 hours.

7. The method as defined in any one of claims 1-6, **characterised in that** prior to the lamination, air is sucked from between the glass sheets (4), the laminating foils (3) and the foil (1).

8. The method as defined in any one of claims 1-7, **characterised in that** when laminating, the pieces of glass and the foils are heated uniformly for more than 2, preferably 3-5 hours.

9. The method as defined in any one of claims 1-8, **characterised in that** the laminating temperature is kept at 118 ± 2°C.

10. The method as defined in any one of claims 7-9, **characterised in that** sucking away the air and laminating at a raised temperature are performed between two elastic and hermetic foils with the pieces of glass floating hinged on the foils in a substantially vertical direction.

11. Laminated patterned glass comprising two glass sheets (4) having two laminating foils (3) between them and a patterned layer in the middle of them, **characterised in that** as the laminating foils, UV-resistant PVB foils (3) are used, and the patterning layer is formed from a polyester film (1) having the desired patterning (2) imprinted or printed thereon using a water-soluble colouring agent.
